(19) Europäisches Patentamt
European Patent Office
Office européen des brevets

(11) EP 3 902 037 A1

(12) **EUROPEAN PATENT APPLICATION**

(43) Date of publication:
**27.10.2021 Bulletin 2021/43**

(21) Application number: **20170848.4**

(22) Date of filing: **22.04.2020**

(51) Int Cl.:
***H01M 4/525*** *(2010.01)* ***C01G 53/00*** *(2006.01)*
***H01M 10/052*** *(2010.01)* ***H01M 4/62*** *(2006.01)*
*H01M 4/505 (2010.01)* *H01M 4/36 (2006.01)*

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **BASF SE**
**67056 Ludwigshafen am Rhein (DE)**

(72) Inventors:
- **TAKEUCHI, Ryosuke**
  **660-0083 Amagasaki (JP)**
- **NUMATA, Eri**
  **660-0083 Amagasaki (JP)**
- **ITO, Seitaro**
  **659-0014 Santa Clara (JP)**
- **SHIN, Ji-Yong**
  **660-0083 Amagasaki (JP)**

(74) Representative: **BASF IP Association**
**BASF SE**
**GBI-C006**
**67056 Ludwigshafen (DE)**

(54) **PROCESS FOR MAKING A CATHODE ACTIVE MATERIAL FOR LITHIUM ION BATTERIES, AND CATHODE ACTIVE MATERIAL**

(57) Process for the manufacture of a coated cathode active material comprising the steps of
(a) providing a particulate electrode active material according to general formula $Li_{1+x}TM_{1-x}O_2$, wherein TM is Ni and, optionally, at least one of Co and Mn, and, optionally, at least one element selected from Al, Mg, and Ba, transition metals other than Ni, Co, and Mn, and wherein x is in the range of from zero to 0.2, wherein at least 50 mole-% of the transition metal of TM is Ni,
(b) treating said particulate electrode active material with water,
(c) removing the water by solid-liquid separation,
(d) adding a source of boron to the solid material obtained from step (c), and
(e) treating the mixture obtained from step (d) at a temperature in the range of from 250 to 600°C.

EP 3 902 037 A1

## Description

The present invention is directed towards a process for the manufacture of a coated cathode active material comprising the steps of

(a) providing a particulate electrode active material according to general formula $Li_{1+x}TM_{1-x}O_2$, wherein TM is Ni and, optionally, at least one of Co and Mn, and, optionally, at least one element selected from Al, Mg, and Ba, transition metals other than Ni, Co, and Mn, and wherein x is in the range of from zero to 0.2, wherein at least 50 mole-% of the transition metal of TM is Ni,
(b) treating said particulate electrode active material with water,
(c) removing the water by filtration,
(d) adding a source of boron to the solid material obtained from step (c), and
(e) treating the mixture obtained from step (d) at a temperature in the range of from 250 to 600°C.

Lithium ion secondary batteries are modern devices for storing energy. Many application fields have been and are contemplated, from small devices such as mobile phones and laptop computers through car batteries and other batteries for e-mobility. Various components of the batteries have a decisive role with respect to the performance of the battery such as the electrolyte, the electrode materials, and the separator. Particular attention has been paid to the cathode materials. Several materials have been suggested, such as lithium iron phosphates, lithium cobalt oxides, and lithium nickel cobalt manganese oxides. Although extensive research has been performed the solutions found so far still leave room for improvement.

Currently, a certain interest in so-called Ni-rich electrode active materials may be observed, for example electrode active materials that contain 75 mole-% or more of Ni, referring to the total TM content.

One problem of lithium ion batteries - especially of Ni-rich electrode active materials - is attributed to undesired reactions on the surface of the electrode active materials. Such reactions may be a decomposition of the electrolyte or the solvent or both. It has thus been tried to protect the surface without hindering the lithium exchange during charging and discharging. Examples are attempts to coat the electrode active materials with, e.g., aluminium oxide or calcium oxide, see, e.g., US 8,993,051.

Other theories assign undesired reactions to free LiOH or $Li_2CO_3$ on the surface. Attempts have been made to remove such free LiOH or $Li_2CO_3$ by washing the electrode active material with water, see, e.g., JP 4,789,066 B, JP 5,139,024 B, and US2015/0372300. However, in some instances it was observed that the properties of the resultant electrode active materials did not improve.

It was an objective of the present invention to provide a process for making Ni-rich electrode active materials with excellent electrochemical properties. It was also an objective to provide Ni-rich electrode active materials with excellent electrochemical properties.

Accordingly, the process defined at the outset has been found, hereinafter also referred to as "inventive process".

The inventive process comprises the steps of

(a) providing a particulate electrode active material according to general formula $Li_{1+x}TM_{1-x}O_2$, wherein TM is Ni and, optionally, at least one of Co and Mn, and, optionally, at least one element selected from Al, Mg, and Ba, transition metals other than Ni, Co, and Mn, and wherein x is in the range of from zero to 0.2, wherein at least 50 mole-% of the transition metal of TM is Ni,
(b) treating said particulate electrode active material with water,
(c) removing the water by filtration,
(d) adding a source of boron to the solid material obtained from step (c), and
(e) treating the mixture obtained from step (d) at a temperature in the range of from 250 to 600°C.

The inventive process is described in more detail below.

The inventive process comprises five steps, (a), (b), (c), (d), and (e), in the context of the present invention also referred to as step (a) and step (b) and step (c) and step (d) and step (e), respectively. The commencement of steps (b) and (c) may be simultaneously or preferably subsequently. Steps (b) and (c) may be performed simultaneously or subsequently or, preferably, at least partially overlapping or simultaneously. Step (d) is performed after completion of step (c).

The inventive process starts off from an electrode active material according to general formula $Li_{1+x}TM_{1-x}O_2$, wherein TM comprises Ni and, optionally, at least one transition metal selected from Co and Mn, and, optionally, at least one element selected from Al, Ba, B, and Mg and, wherein at least 50 mole-% of TM is Ni, preferably at least 75 mole-%, and x is in the range of from -0.05 to 0.2. Said material is hereinafter also referred to as starting material.

In one embodiment of the present invention the starting material has an average particle diameter (D50) in the

range of from 3 to 20 μm, preferably from 5 to 16 μm. The average particle diameter can be determined, e. g., by light scattering or LASER diffraction or electroacoustic spectroscopy. The particles are usually composed of agglomerates from primary particles, and the above particle diameter refers to the secondary particle diameter.

In one embodiment of the present invention, the starting material has a specific surface (BET), hereinafter also referred to as "BET surface", in the range of from 0.1 to 2.0 $m^2/g$. The BET surface may be determined by nitrogen adsorption after outgassing of the sample at 200°C for 30 minutes or more and beyond this in accordance with DIN ISO 9277:2010.

In one embodiment of the present invention, the particulate material provided in step (a) has a moisture content in the range of from 20 to 2,000 ppm, determined by Karl-Fischer titration, preferred are 20 to 1,200 ppm.

In one embodiment of the present invention, TM is a combination of metals according to general formula (I)

$$(Ni_aCo_bMn_c)_{1-d}M_d \qquad (I)$$

with

a being in the range of from 0.6 to 0.95, preferably from 0.75 to 0.88,
b being in the range of from zero to 0.2, preferably from 0.02 to 0.15,
c being in the range of from zero to 0.2, preferably from 0.02 to 0.1, and
d being in the range of from zero to 0.04,

M is at least one of Al, Mg, Ba, Nb, Ta, Ti, Mo, W and Zr, and

$$a + b + c = 1.$$

In one embodiment of the present invention, the variable c is zero, M is Al and d is in the range of from 0.01 to 0.05.

In one embodiment of the present invention, the variable TM corresponds to general formula (Ia)

$$(Ni_aCo_bMn_c)_{1-d}M^1_d \qquad (I\ a)$$

with a + b + c = 1 and

a being in the range of from 0.75 to 0.95, preferably from 0.83 to 0.95,

b being in the range of from 0.025 to 0.2, preferably from 0.025 to 0.12,

c being in the range of from 0.025 to 0.2, preferably 0.05 to 0.1,

d being in the range of from zero to 0.1, preferably from zero to 0.04,

$M^1$ is at least one of Al, Mg, W, Mo, Ti or Zr, preferably at least one of Al, Ti and W.

In one embodiment of the present invention, the variable c is zero, $M^1$ is Al and d is in the range of from 0.01 to 0.05.

In another embodiment of the present invention, the variable TM corresponds to general formula (I b)

$$(Ni_{a^*}Co_{b^*}Al_{e^*})_{1-d^*}M^2_{d^*} \qquad (I\ b)$$

with a* + b* + c* = 1 and

a* being in the range of from 0.75 to 0.95, preferably from 0.88 to 0.95,

b* being in the range of from 0.025 to 0.2, preferably from 0.025 to 0.1,

e* being in the range of from 0.01 to 0.2, preferably from 0.015 to 0.04,

d* being in the range of from zero to 0.04, preferably from zero to 0.02,

$M^2$ is at least one of W, Mo, Ti or Zr.

The variable x is in the range of from -0.05 to 0.2.

In one embodiment of the present invention TM corresponds to general formula (I a) and x is in the range from zero to 0.2, preferably from zero to 0.1 and even more preferably 0.01 to 0.05.

In one embodiment of the present invention, TM is selected from $Ni_{0.6}Co_{0.2}Mn_{0.2}$, $Ni_{0.7}Co_{0.2}Mn_{0.1}$, $Ni_{0.8}Co_{0.1}Mn_{0.1}$, $Ni_{0.89}Co_{0.055}Al_{0.055}$, $Ni_{0.9}Co_{0.045}Al_{0.045}$ and $Ni_{0.85}Co_{0.1}Mn_{0.05}$.

In one embodiment of the present invention TM corresponds to general formula (I b) and x is in the range of from -0.05 to zero.

The electrode active material provided in step (a) is usually free from conductive carbon, that means that the conductive carbon content of starting material is less than 1% by weight, referring to said starting material, preferably 0.001 to 1.0 % by weight.

Some elements are ubiquitous. In the context of the present invention, traces of ubiquitous metals such as sodium, calcium, iron or zinc, as impurities will not be taken into account in the description of the present invention. Traces in this context will mean amounts of 0.02 mol-% or less, referring to the total metal content of the starting material.

In step (b), said electrode active material is treated with water. Said water may contain traces of impurities and thus have a pH value in the range of from 5 to 8, preferably 7.5 to 7.8 at the beginning of step (b). In the course of step (b), the pH value of said water may increase to a range of from 11.5 to 13.5

In one embodiment of the present invention, step (b) is performed by slurrying the electrode active material from step (a) in water.

In one embodiment of the present invention, step (b) is performed at a temperature in the range of from 5 to 85°C, preferred are 10 to 60°C.

In one embodiment of the present invention, step (b) is performed at normal pressure.

Step (b) may be performed, for example, in a vessel that can be easily discharged, for example due to its location above a filter device. Such vessel may be charged with electrode active material followed by introduction of water. In another embodiment, such vessel is charged with water followed by introduction of electrode active material. In another embodiment, electrode active material and water are introduced simultaneously.

In one embodiment of the present invention, the volume ratio of electrode active material and total aqueous medium in step (b) is in the range of from 3:1 to 1:5, preferably from 2:1 to 1:2.

Step (b) may be supported by mixing operations, for example shaking or in particular by stirring or shearing, see below.

In one embodiment of the present invention, step (b) has a duration in the range of from 1 minute to 30 minutes, preferably 1 minute to less than 5 minutes. A duration of 5 minutes or more is possible in embodiments wherein water treatment according to step (b) and water removal according to step (c) are performed overlapping or simultaneously.

Step (c) includes the removal of the water by a solid-liquid separation method. Examples are decantation and filtration and separation by a centrifuge, filtration being preferred, for example on a band filter or in a filter press. In the context of step (c), "removal of the water" does not necessarily mean a complete removal of the water but includes a formation of a wet filter cake.

In one embodiment of step (c), the slurry obtained in step (b) is discharged directly into a centrifuge, for example a decanter centrifuge or a filter centrifuge, or on a filter device, for example a suction filter or in a belt filter that is located preferably directly below the vessel in which step (b) is performed. Then, filtration is commenced.

In a particularly preferred embodiment of the present invention, steps (b) and (c) are performed in a filter device with stirrer, for example a pressure filter with stirrer or a suction filter with stirrer. At most 3 minutes after - or even immediately after - having combined starting material and aqueous medium in accordance with step (b), removal of aqueous medium is commenced by starting the filtration. On laboratory scale, steps (b) and (c) may be performed on a Büchner funnel, and steps (b) and (c) may be supported by manual stirring.

In a preferred embodiment, step (b) is performed in a filter device, for example a stirred filter device that allows stirring of the slurry in the filter or of the filter cake.

In one embodiment of the present invention, the water removal in accordance to step (c) has a duration in the range of from 1 minute to 1 hour.

In one embodiment of the present invention, stirring in step (b) - and (c), if applicable - is performed with a rate in the range of from 1 to 50 revolutions per minute ("rpm"), preferred are 5 to 20 rpm.

In one embodiment of the present invention, filter media may be selected from ceramics, sintered glass, sintered metals, organic polymer films, non-wovens, and fabrics.

In one embodiment of the present invention, steps (b) and (c) are carried out under an atmosphere with reduced $CO_2$ content, e.g., a carbon dioxide content in the range of from 0.01 to 500 ppm by weight, preferred are 0.1 to 50 ppm

by weight. The $CO_2$ content may be determined by, e.g., optical methods using infrared light. It is even more preferred to perform steps (b) and (c) under an atmosphere with a carbon dioxide content below detection limit for example with infrared-light based optical methods.

Subsequently, the water-treated material obtained after step (c) is dried, for example at a temperature in the range of from 40 to 250°C at a normal pressure or reduced pressure, for example 1 to 500 mbar. If drying under a lower temperature such as 40 to 100°C is desired a strongly reduced pressure such as from 1 to 20 mbar is preferred.

In one embodiment of the present invention, said drying is carried out under an atmosphere with reduced $CO_2$ content, e.g., a carbon dioxide content in the range of from 0.01 to 500 ppm by weight, preferred are 0.1 to 50 ppm by weight. The $CO_2$ content may be determined by, e.g., optical methods using infrared light. It is even more preferred to perform step (d) under an atmosphere with a carbon dioxide content below detection limit for example with infrared light-based optical methods.

In one embodiment of the present invention said drying has a duration in the range of from 1 to 10 hours, preferably 90 minutes to 6 hours.

After step (c) and - if applicable - after the subsequent drying, the solid residue may have a residual moisture content of at most 10% by weight.

In step (d), a source of boron is added to the solid material obtained from step (c). Suitable sources of boron are selected from ammonium borate, $NaBO_2$, $LiBO_2$, $B_2O_3$ and boric acid. Preferred is $LiBO_2$, and even more preferred is boric acid.

In one embodiment of the present invention, an amount of 0.4 to 1.80 mol-% of boron in said source of boron are added in step (d), referring to the content of TM in $Li_{1+x}TM_{1-x}O_2$, which may correspond to 500 to 2,000 ppm by weight, and the preferred range is 0.60 to 1.40 mol-%, which may correspond to 750 to 1,500 ppm by weight.

In one embodiment of the present invention, in step (d), said source of boron is added as a powder with an average particle diameter (D50) from sub-micron to 1000 $\mu$m, preferred range is sub-micron to 50 $\mu$m.

In another embodiment of the present invention, in step (d), said source of boron is added as an aqueous solution. The concentration of boron in such a solution may be in the range of from 0.04 to 20 % by weight, preferred are 0.9 to 5% by weight.

In one embodiment of the present invention, mixing is performed during step (d), for example with a mixer, e.g. with an agitator, with a plough-share mixer or a free-fall mixer.

The inventive process includes a subsequent step (e):

(e) thermally treating the residue obtained from step (d).

Step (e) may be carried out in any type of oven, for example a roller hearth kiln, a pusher kiln, a rotary kiln, a pendulum kiln, or - for lab scale trials - in a muffle oven. Rotary kilns are preferred.

The temperature of the thermal treatment according to step (e) may be in the range of from 300 to 900°C, preferably 300 to 700°C and even more preferably from 550 to 650°C.

The temperature of 350 to 700°C corresponds to the maximum temperature of step (e).

It is possible to subject the material obtained from step (d) directly to step (e). However, it is preferred to increase the temperature stepwise, or to ramp up the temperature, or to dry the material obtained after step (d) at first at a temperature in the range of from 40 to 125°C before subjecting it to step (e). Said step-wise increase or ramping up may be performed under normal pressure or reduced pressure, for example 1 to 500 mbar.

Step (e) - at its maximum temperature - may be performed under normal pressure.

In one embodiment of the present invention, step (e) is carried out under an oxygen-containing atmosphere, for example air, oxygen-enriched air or pure oxygen.

In one embodiment of the present invention the thermal treatment according to step (e) is in the range of from 250 to 600°C with a duration of from 10 minutes to 5 hours, preferably 250 to 400°C.

In one embodiment of the present invention, the residue obtained from step (d) is first treated at a temperature in the range of from 250 to 300°C with a duration of from 10 minutes to 5 hours and then treated at a temperature in the range of from 350 to 600°C, preferably 350 to 400°C and even more preferably from 325 to 375°C.

In one embodiment of the present invention, step (e) is carried out under an atmosphere with reduced $CO_2$ content, e.g., a carbon dioxide content in the range of from 0.01 to 500 ppm by weight, preferred are 0.1 to 50 ppm by weight. The $CO_2$ content may be determined by, e.g., optical methods using infrared light. It is even more preferred to perform step (e) under an atmosphere with a carbon dioxide content below detection limit for example with infrared light based optical methods.

In one embodiment of the present invention step (e) has a duration in the range of from 1 to 10 hours, preferably 90 minutes to 6 hours.

In one embodiment of the present invention, the lithium content of an electrode active material treated according to the inventive process is reduced by 1 to 5% by weight, preferably 2 to 4%. Said reduction mainly affects the so-called residual lithium.

By carrying out the inventive process, electrode active materials are obtained with excellent electrochemical

properties. Without wishing to be bound by any theory, we assume that the extra aluminum may lead to scavenging lithium compounds deposited at the surface of the electrode active material.

Without wishing to be bound by any theory, we assume that the surface of the electrode active material is less negatively influenced by the inventive process than by washing processes without subsequent steps (d) and (e).

A further aspect of the present invention is directed towards a cathode active material, hereinafter also referred to as inventive cathode active material. Inventive electrode active material is in particulate form and its core has the general formula $Li_{1+x1}TM_{1-x1}O_2$, wherein x1 is in the range of from -0.05 to 0.15 and TM is according to the general formula (I)

$$(Ni_aCo_bMn_c)_{1-d}M_d \qquad (I)$$

with

a being in the range of from 0.6 to 0.95, preferably from 0.75 to 0.88,
b being in the range of from zero to 0.2, preferably from 0.02 to 0.15,
c being in the range of from zero to 0.2, preferably from 0.02 to 0.1, and
d being in the range of from zero to 0.04,

M is at least one of Al, Mg, Ba, Nb, Ta, Ti, Mo, W and Zr, and

$$a + b + c = 1.$$

Inventive cathode active materials have a pressed powder pellet electrical conductivity in the range of 0.0005 to 0.1 S/cm, preferably up to 0.07 S/cm. Inventive cathode active material further has a layer of glassy boron oxide.

In one embodiment of the present invention, the variable c is zero, M is Al and d is in the range of from 0.01 to 0.05.

In one embodiment of the present invention, the inventive cathode active material has a specific surface (BET) in the range of from 0.1 to 2.0 $m^2/g$. The BET surface may be determined by nitrogen adsorption after outgassing of the sample at 200°C for 30 minutes or more and beyond this in accordance with DIN ISO 9277:2010.

In one embodiment of the present invention, the inventive cathode active material has an average particle diameter (D50) in the range of from 3 to 20 $\mu$m, preferably from 5 to 16 $\mu$m. The average particle diameter can be determined, e. g., by light scattering or LASER diffraction or electroacoustic spectroscopy. The particles of inventive cathode active material are usually composed of agglomerates from primary particles, and the above particle diameter refers to the secondary particle diameter.

A further aspect of the present invention refers to electrodes comprising at least one electrode material active according to the present invention. They are particularly useful for lithium ion batteries. Lithium ion batteries comprising at least one electrode according to the present invention exhibit a good discharge behavior. Electrodes comprising at least one electrode active material according to the present invention are hereinafter also referred to as inventive cathodes or cathodes according to the present invention.

Cathodes according to the present invention can comprise further components. They can comprise a current collector, such as, but not limited to, an aluminum foil. They can further comprise conductive carbon and a binder.

Suitable binders are preferably selected from organic (co)polymers. Suitable (co)polymers, i.e. homopolymers or copolymers, can be selected, for example, from (co)polymers obtainable by anionic, catalytic or free-radical (co)polymerization, especially from polyethylene, polyacrylonitrile, polybutadiene, polystyrene, and copolymers of at least two comonomers selected from ethylene, propylene, styrene, (meth)acrylonitrile and 1,3-butadiene. Polypropylene is also suitable. Polyisoprene and polyacrylates are additionally suitable. Particular preference is given to polyacrylonitrile.

In the context of the present invention, polyacrylonitrile is understood to mean not only polyacrylonitrile homopolymers but also copolymers of acrylonitrile with 1,3-butadiene or styrene. Preference is given to polyacrylonitrile homopolymers.

In the context of the present invention, polyethylene is not only understood to mean homopoly-ethylene, but also copolymers of ethylene which comprise at least 50 mol% of copolymerized ethylene and up to 50 mol% of at least one further comonomer, for example $\alpha$-olefins such as propylene, butylene (1-butene), 1-hexene, 1-octene, 1-decene, 1-dodecene, 1-pentene, and also isobutene, vinylaromatics, for example styrene, and also (meth)acrylic acid, vinyl acetate, vinyl propionate, $C_1$-$C_{10}$-alkyl esters of (meth)acrylic acid, especially methyl acrylate, methyl methacrylate, ethyl acrylate, ethyl methacrylate, n-butyl acrylate, 2-ethylhexyl acrylate, n-butyl methacrylate, 2-ethylhexyl methacrylate, and also maleic acid, maleic anhydride and itaconic anhydride. Polyethylene may be HDPE or LDPE.

In the context of the present invention, polypropylene is not only understood to mean homopolypropylene, but

also copolymers of propylene which comprise at least 50 mol% of copolymerized propylene and up to 50 mol% of at least one further comonomer, for example ethylene and α-olefins such as butylene, 1-hexene, 1-octene, 1-decene, 1-dodecene and 1-pentene. Polypropylene is preferably isotactic or essentially isotactic polypropylene.

In the context of the present invention, polystyrene is not only understood to mean homopolymers of styrene, but also copolymers with acrylonitrile, 1,3-butadiene, (meth)acrylic acid, $C_1$-$C_{10}$-alkyl esters of (meth)acrylic acid, divinylbenzene, especially 1,3-divinylbenzene, 1,2-diphenylethylene and α-methylstyrene.

Another preferred binder is polybutadiene.

Other suitable binders are selected from polyethylene oxide (PEO), cellulose, carboxymethylcellulose, polyimides and polyvinyl alcohol.

In one embodiment of the present invention, binder is selected from those (co)polymers which have an average molecular weight $M_w$ in the range from 50,000 to 1,000,000 g/mol, preferably to 500,000 g/mol.

Binder may be cross-linked or non-cross-linked (co)polymers.

In a particularly preferred embodiment of the present invention, binder is selected from halogenated (co)polymers, especially from fluorinated (co)polymers. Halogenated or fluorinated (co)polymers are understood to mean those (co)polymers which comprise at least one (co)polymerized (co)monomer which has at least one halogen atom or at least one fluorine atom per molecule, more preferably at least two halogen atoms or at least two fluorine atoms per molecule. Examples are polyvinyl chloride, polyvinylidene chloride, polytetrafluoroethylene, polyvinylidene fluoride (PVdF), tetrafluoroethylene-hexafluoropropylene copolymers, vinylidene fluoride-hexafluoropropylene copolymers (PVdF-HFP), vinylidene fluoride-tetrafluoroethylene copolymers, perfluoroalkyl vinyl ether copolymers, ethylene-tetrafluoroethylene copolymers, vinylidene fluoride-chlorotrifluoroethylene copolymers and ethylene-chlorofluoroethylene copolymers.

Suitable binders are especially polyvinyl alcohol and halogenated (co)polymers, for example polyvinyl chloride or polyvinylidene chloride, especially fluorinated (co)polymers such as polyvinyl fluoride and especially polyvinylidene fluoride and polytetrafluoroethylene.

Inventive cathodes may comprise 1 to 15% by weight of binder(s), referring to electrode active material. In other embodiments, inventive cathodes may comprise 0.1 up to less than 1% by weight of binder(s).

A further aspect of the present invention is a battery, containing at least one cathode comprising inventive electrode active material, carbon, and binder, at least one anode, and at least one electrolyte.

Embodiments of inventive cathodes have been described above in detail.

Said anode may contain at least one anode active material, such as carbon (graphite), $TiO_2$, lithium titanium oxide, silicon or tin. Said anode may additionally contain a current collector, for example a metal foil such as a copper foil.

Said electrolyte may comprise at least one non-aqueous solvent, at least one electrolyte salt and, optionally, additives.

Non-aqueous solvents for electrolytes can be liquid or solid at room temperature and is preferably selected from among polymers, cyclic or acyclic ethers, cyclic and acyclic acetals and cyclic or acyclic organic carbonates.

Examples of suitable polymers are, in particular, polyalkylene glycols, preferably poly-$C_1$-$C_4$-alkylene glycols and in particular polyethylene glycols. Polyethylene glycols can here comprise up to 20 mol% of one or more $C_1$-$C_4$-alkylene glycols. Polyalkylene glycols are preferably polyalkylene glycols having two methyl or ethyl end caps.

The molecular weight $M_w$ of suitable polyalkylene glycols and in particular suitable polyethylene glycols can be at least 400 g/mol.

The molecular weight $M_w$ of suitable polyalkylene glycols and in particular suitable polyethylene glycols can be up to 5 000 000 g/mol, preferably up to 2 000 000 g/mol.

Examples of suitable acyclic ethers are, for example, diisopropyl ether, di-n-butyl ether, 1,2-dimethoxyethane, 1,2-diethoxyethane, with preference being given to 1,2-dimethoxyethane.

Examples of suitable cyclic ethers are tetrahydrofuran and 1,4-dioxane.

Examples of suitable acyclic acetals are, for example, dimethoxymethane, diethoxymethane, 1,1-dimethoxyethane and 1,1-diethoxyethane.

Examples of suitable cyclic acetals are 1,3-dioxane and in particular 1,3-dioxolane.

Examples of suitable acyclic organic carbonates are dimethyl carbonate, ethyl methyl carbonate and diethyl carbonate.

Examples of suitable cyclic organic carbonates are compounds according to the general formulae (II) and (III)

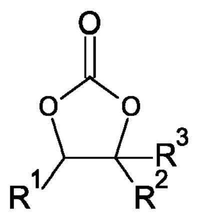

(II)

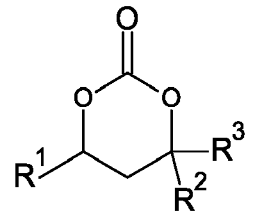

(III)

where $R^1$, $R^2$ and $R^3$ can be identical or different and are selected from among hydrogen and $C_1$-$C_4$-alkyl, for example methyl, ethyl, n-propyl, isopropyl, n-butyl, isobutyl, sec-butyl and tert-butyl, with $R^2$ and $R^3$ preferably not both being tert-butyl.

In particularly preferred embodiments, $R^1$ is methyl and $R^2$ and $R^3$ are each hydrogen, or $R^1$, $R^2$ and $R^3$ are each hydrogen.

Another preferred cyclic organic carbonate is vinylene carbonate, formula (IV).

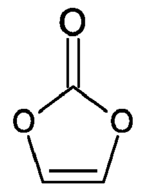

(IV)

The solvent or solvents is/are preferably used in the water-free state, i.e. with a water content in the range from 1 ppm to 0.1% by weight, which can be determined, for example, by Karl-Fischer titration.

Electrolyte (C) further comprises at least one electrolyte salt. Suitable electrolyte salts are, in particular, lithium salts. Examples of suitable lithium salts are $LiPF_6$, $LiBF_4$, $LiClO_4$, $LiAsF_6$, $LiCF_3SO_3$, $LiC(C_nF_{2n+1}SO_2)_3$, lithium imides such as $LiN(C_nF_{2n+1}SO_2)_2$, where n is an integer in the range from 1 to 20, $LiN(SO_2F)_2$, $Li_2SiF_6$, $LiSbF_6$, $LiAlCl_4$ and salts of the general formula $(C_nF_{2n+1}SO_2)_tYLi$, where m is defined as follows:

t = 1, when Y is selected from among oxygen and sulfur,
t = 2, when Y is selected from among nitrogen and phosphorus, and
t = 3, when Y is selected from among carbon and silicon.

Preferred electrolyte salts are selected from among $LiC(CF_3SO_2)_3$, $LiN(CF_3SO_2)_2$, $LiPF_6$, $LiBF_4$, $LiClO_4$, with particular preference being given to $LiPF_6$ and $LiN(CF_3SO_2)_2$.

In an embodiment of the present invention, batteries according to the invention comprise one or more separators by means of which the electrodes are mechanically separated. Suitable separators are polymer films, in particular porous polymer films, which are unreactive toward metallic lithium. Particularly suitable materials for separators are polyolefins, in particular film-forming porous polyethylene and film-forming porous polypropylene.

Separators composed of polyolefin, in particular polyethylene or polypropylene, can have a porosity in the range from 35 to 45%. Suitable pore diameters are, for example, in the range from 30 to 500 nm.

In another embodiment of the present invention, separators can be selected from among PET nonwovens filled with inorganic particles. Such separators can have porosities in the range from 40 to 55%. Suitable pore diameters are, for example, in the range from 80 to 750 nm.

Batteries according to the invention further comprise a housing which can have any shape, for example cuboidal or the shape of a cylindrical disk or a cylindrical can. In one variant, a metal foil configured as a pouch is used as housing.

Batteries according to the invention display a good discharge behavior, for example at low temperatures (zero °C or below, for example down to -10°C or even less), a very good discharge and cycling behavior.

Batteries according to the invention can comprise two or more electrochemical cells that combined with one another, for example can be connected in series or connected in parallel. Connection in series is preferred. In batteries according to the present invention, at least one of the electrochemical cells contains at least one cathode according to the invention. Preferably, in electrochemical cells according to the present invention, the majority of the electrochemical cells contains a cathode according to the present invention. Even more preferably, in batteries according to the present invention all the electrochemical cells contain cathodes according to the present invention.

The present invention further provides for the use of batteries according to the invention in appliances, in particular in mobile appliances. Examples of mobile appliances are vehicles, for example automobiles, bicycles, aircraft or water vehicles such as boats or ships. Other examples of mobile appliances are those which move manually, for example computers, especially laptops, telephones or electric hand tools, for example in the building sector, especially drills, battery-powered screwdrivers or battery-powered staplers.

The present invention is further illustrated by working examples.

General: NMP: N-methyl pyrrolidone. Ultra-dry air: less than 50 ppm $CO_2$, determined by infrared methods, and virtually moisture-free.

Measurement of pressed powder pellet electrical conductivity : a die equipped with electrodes incorporated into the pressing cell, diameter of the die: ½ inch, is charged with 4 grams of respective CAM, pressurized the pellet of the CAM under a force of 20 kN or 64 MPa under pellet formation. The pressed powder pellet electrical conductivity of the pellet is then measured.

In the context of the present invention, the terms "suspended" and "slurried" are used interchangeably.

I. Synthesis of cathode active materials

I.1 Synthesis of a precursor TM-OH.1

A stirred tank reactor was charged with an aqueous solution 49 g of ammonium sulfate per kg of water. The solution was tempered to 55°C and a pH value of 12 was adjusted by adding an aqueous sodium hydroxide solution.

The co-precipitation reaction was started by simultaneously feeding an aqueous transition metal sulfate solution and aqueous sodium hydroxide solution at a flow rate ratio of 1.8, and a total flow rate resulting in a residence time of 8 hours. The transition metal solution contained the sulfates of Ni, Co and Mn at a molar ratio of 8.3:1.2:0.5 and a total transition metal concentration of 1.65 mol/kg. The aqueous sodium hydroxide solution contained 25 wt.% sodium hydroxide solution and 25 wt.% ammonia solution in a weight ratio of 6. The pH value was kept at 12 by the separate feed of an aqueous sodium hydroxide solution. Beginning with the commencement of all feeds, mother liquor was removed continuously. After 33 hours all feed flows were stopped. The mixed transition metal (TM) oxyhydroxide precursor TM-OH.1 was obtained by filtration of the resulting suspension, washing with distilled water, drying at 120°C in air and sieving.

1.2 Synthesis of a base cathode active material, B-CAM.1

Step (a.1) The mixed transition metal oxyhydroxide precursor T-M-OH.1 was mixed with LiOH monohydrate with a Li/(Ni+Co+Mn) molar ratio of 1.05. The mixture was heated to 780°C and kept for 10 hours in a forced flow of a mixture of 60% oxygen and 40% nitrogen (by volume). After cooling to ambient temperature the resultant powder was deagglomerated and sieved through a 32 μm mesh to obtain the electrode active material B-CAM 1.

D50 = 10.0 μm determined using the technique of laser diffraction in a Mastersizer 3000 instrument from Malvern Instruments. The Li and transition metal content were determined by ICP analytics. Residual moisture at 250 °C was determined to be below 300 ppm.

II. Synthesis of inventive and of comparative cathode active materials

II.1 Synthesis of CAM.1 (inventive)

Treatment of B-CAM.1 by addition of boric acid powder addition into the filter cake after washing using deionized water, followed by drying and calcination

Step (b.1) At ambient temperature, an amount of 200 g B-CAM.1 was slurried in 140 mL of deionized water under stirring over a period of 5 min.

Step (c.1) The resultant slurry was transferred on a filter press and pressurized using ultra-dry air to remove the water by filtration.

Step (d.1) 0.86 g of boric acid powder were added to 150 g of filter cake obtained from step (c.1) and homogenized by an agitator. The resultant solid was dried under ultra-dry air at 120°C over a period of 4 hours, followed by a thermal treatment at 300°C for 2 hours in a forced flow of oxygen. Inventive cathode active material CAM.1 was obtained.

II.2 Synthesis of CAM.2

Treatment of B-CAM.1 by addition of alkaline deionized water solution of boric acid addition into the filter cake after washing using deionized water, followed by drying and calcination

Steps (b.1) and (c.1) were performed as above.

Step (d.2) A solution of 0.86 g boric acid dissolved in 6 ml of an alkaline deionized water (pH value adjusted

to 13 using LiOH) was added to 150 g of the filter cake obtained from step (c.1) under homogenization with an agitator.

Step (e.2): The resultant wet powder was dried under ultra-dry free air 120°C over a period of 4 hours followed by a thermal treatment at 300°C for 2 hours in a forced flow of oxygen. Inventive cathode active material CAM.2 was obtained.

II.3 Synthesis of CAM.3

After washing of B-CAM.1 using deionized water and drying, treatment by powdery boric acid and calcination

Steps (b.1) and (c.1) were performed as above. The filter cake obtained from step (c.1) was dried under ultra-dry air 120°C over a period of 4 hours.

Step (d.3) 0.86 g of boric acid powder was added to 150 g of the dried filter cake from above under homogenization by a mixer.

Step (e.3): The resultant powder was thermally treated at 300°C for 2 hours in a forced flow of oxygen.

Inventive cathode active material CAM.3 was obtained

II.4 Synthesis of CAM.4:

Treatment of B-CAM.1 by addition of deionized water solution of boric acid addition into the filter cake after washing using deionized water, followed by drying and calcination

Steps (b.1) and (c.1) were performed as above.

Step (d.4) An amount of 6 ml aqueous solution of 0.86 g boric acid was added to 150 g of the dried filter cake from above under homogenization by a mixer.

Step (e.4): The resultant wet powder was dried under ultra-dry free air 120°C over a period of 4 hours followed by a thermal treatment at 300°C for 2 hours in a forced flow of oxygen.

Inventive cathode active material CAM.5 was obtained.

II.5 Synthesis of C-CAM.5

Treatment of B-CAM.1 with boric acid powder without washing step (b.1) and filtration step (c.1) Step c-(c.5) 0.86 g of boric acid was added to 150 g B-CAM.1 under homogenization with a mixer, followed by a thermal treatment at 300°C for 2 hours in a forced flow of oxygen. Comparative cathode active material C-CAM.5 was obtained.

III Testing of the cathode active material

III.1 Manufacture of electrodes

III.1.1 Manufacture of positive electrodes

PVDF binder (Solef® 5130) was dissolved in NMP (Merck) to produce a 7.5 wt.% solution. For electrode preparation, binder solution (3 wt.%), graphite (SFG6L, 2 wt.%), and carbon black (Super C65, 1 wt.-%) were suspended in NMP. After mixing using a planetary centrifugal mixer (ARE-250, Thinky Corp.; Japan), either any of inventive CAM.1 to CAM.4 or comparative cathode active materials (94 wt.%) was added and the suspension was mixed again to obtain a lump-free slurry. The solid content of the slurry was adjusted to 65%. The slurry was coated onto Al foil using a KTF-S roll-to-roll coater (Mathis AG). Prior to use, all electrodes were calendared. The thickness of cathode material was 70 $\mu$m, corresponding to 15 mg/cm$^2$. All electrodes were dried at 105°C for 7 hours before battery assembly.

III.2 Manufacture of an electrolyte

A base electrolyte composition was prepared containing 12.7 wt% of $LiPF_6$, 26.2 wt% of ethylene carbonate (EC), and 61.1 wt% of ethyl methyl carbonate (EMC) (EL base 1), based on the total weight of EL base 1. To this base electrolyte formulation 2wt.% of vinylene carbonate (VC) was added (EL base 2).

III.3 Fabrication of a test cell

III.3.1 Coin-type half cells

Coin-type half cells (20 mm in diameter and 3.2 mm in thickness) comprising a cathode prepared as described under III.1.1 and lithium metal foil as working and counter electrode, respectively, were assembled upon injection of

0.15 mL of the electrolyte as described under III.2 and sealed in an Ar-filled glove box. The cathode, a separator, and the lithium metal foil were superposed, respectively, to produce a coin half cell.

IV Evaluation of cell performance

IV.1 Evaluation of coin-type half cell performance

Cell performance was evaluated using the coin-type cells as described in III.3.1. For the battery performance, initial capacity and Coulombic efficiency for initial performance, and cycling capacity retention at 25 °C and 45 °C and resistance growth for long term stability of the cells were measured.

IV.1.1 Initial performance

The initial performance was measured as follows:
Coin half cells fabricated according to 111.3.1 were tested in a voltage range between 4.3 V to 3.0 V at 25 °C. For the initial cycle, the initial charge was conducted in the CC-CV mode, i.e., a constant current (CC) of 0.1 C was applied until reaching 4.3 V, and retained at 4.3 V (CV) until reaching 0.01 C. After a 10 min resting period, initial discharge was carried out in the CC mode of 0.1 C to 3.0 V.

Table 1: Initial capacity and Coulombic efficiency for materials based on B-CAM.1

| CAM | 1st Charge capacity [mA.h/g] | 1st Discharge capacity [mA·h/g] | Coulombic efficiency [%] | pressed powder pellet electrical conductivity [S/cm] |
|---|---|---|---|---|
| B-CAM. 1 | 228.5 | 201.9 | 88.4% | n.d. |
| B-CAM. 1 | 228.2 | 200.3 | 87.8% | n.d. |
| C-CAM. 5 | 226.5 | 200.6 | 88.6% | n.d. |
| C-CAM. 5 | 227.8 | 202.0 | 88.7% | n.d. |
| CAM.1 | 230.8 | 205.8 | 89.2% | 0.019 |
| CAM.1 | 231.2 | 205.6 | 89.0% | 0.019 |
| CAM.2 | 230.2 | 204.0 | 88.6% | 0.019 |
| CAM.2 | 230.8 | 204.9 | 88.8% | 0.019 |
| CAM.3 | 229.9 | 210.6 | 91.6% | 0.011 |
| CAM.3 | 230.2 | 211.4 | 91.8% | 0.011 |
| n.d.: not determined | | | | |

All inventive cathode active materials showed a layer of glassy boron oxide.

## Claims

**1.** Process for the manufacture of a coated cathode active material comprising the steps of

(a) providing a particulate electrode active material according to general formula $Li_{1+x}TM_{1-x}O_2$, wherein TM is Ni and, optionally, at least one of Co and Mn, and, optionally, at least one element selected from Al, Mg, and Ba, transition metals other than Ni, Co, and Mn, and wherein x is in the range of from zero to 0.2, wherein at least 50 mole-% of the transition metal of TM is Ni,
(b) treating said particulate electrode active material with water,
(c) removing the water by a solid-liquid separation step,
(d) adding a source of boron to the solid material obtained from step (c), and

(e) treating the mixture obtained from step (d) at a temperature in the range of from 250 to 600°C.

**2.** Process according to claim 1 wherein TM is a combination of metals according to general formula (I)

$$(Ni_aCo_bMn_c)_{1-d}M_d \qquad (I)$$

with

a being in the range of from 0.6 to 0.95,
b being in the range of from zero to 0.2,
c being in the range of from zero to 0.2, and
d being in the range of from zero to 0.04,
M is at least one of Al, Mg, Ba, Nb, Ta, Ti, Mo, W and Zr, and

$$a + b + c = 1.$$

**3.** Process according to claim 1 or 2 wherein step (c) is performed by filtration.

**4.** Process according to claim 3 wherein in step (d), said source of boron is added to the moist filter cake from step (c).

**5.** Process according to any of the preceding claims wherein in step (d), wherein said source of boron is added as a powder.

**6.** Process according to any of claims 1 to 4 wherein in step (d), said source of boron is added as an aqueous solution.

**7.** Process according to any of the preceding claims wherein the source of boron is boric acid.

**8.** Process according to any of the preceding claims wherein step (e) is performed in a rotary kiln.

**9.** Process according to any of the preceding claims wherein the filter cake obtained from step (c) has a maximum residual moisture content of 10% by weight.

**10.** Cathode active material comprising a core according to general formula $Li_{1+x1}TM_{1-x1}O_2$ wherein x1 is in the range of from -0.05 to 0.15 and TM is a combination of metals according to the general formula (I)

$$(Ni_aCo_bMn_c)_{1-d}M_d \qquad (I)$$

with

a being in the range of from 0.6 to 0.95,
b being in the range of from zero to 0.2,
c being in the range of from zero to 0.2, and
d being in the range of from zero to 0.04,
M is at least one of Al, Mg, Ba, Nb, Ta, Ti, Mo, W and Zr, and

$$a + b + c = 1,$$

and furthermore a layer of glassy boron oxide,
and wherein such cathode active material has a pressed powder pellet electrical conductivity is in the range of 0.0005 to 0.1 S/cm.

**11.** Cathode active material according to claim 10 wherein said cathode active material has a specific surface area (BET) in the range of 0.10 to 2.0 $m^2/g$.

**12.** Cathode comprising

(A) at least one electrode active material according to claim 10 or 11,
(B) carbon in electrically conductive form,
(C) at least one binder.

**13.** Electrochemical cell comprising a cathode according to claim 12.

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2019/300382 A1 (KIM JI HYE [KR] ET AL) 3 October 2019 (2019-10-03)<br>* paragraphs [0093] - [0095], [0111]; claim 11; table 1 *<br>----- | 1-13 | INV.<br>H01M4/525<br>C01G53/00<br>H01M10/052<br>H01M4/62<br><br>ADD.<br>H01M4/505<br>H01M4/36 |
| A | YAN WUWEI ET AL: "A review on doping/coating of nickel-rich cathode materials for lithium-ion batteries", JOURNAL OF ALLOYS AND COMPOUNDS, ELSEVIER SEQUOIA, LAUSANNE, CH, vol. 819, 18 November 2019 (2019-11-18), XP085984785, ISSN: 0925-8388, DOI: 10.1016/J.JALLCOM.2019.153048 [retrieved on 2019-11-18]<br>* abstract, page 8 item 3.4 *<br>----- | 1-13 | |
| A | DU MEILI ET AL: "Enhanced high-voltage cycling stability of Ni-rich LiNi0.8Co0.1Mn0.1O2 cathode coated with Li2O-2B2O3", JOURNAL OF ALLOYS AND COMPOUNDS, ELSEVIER SEQUOIA, LAUSANNE, CH, vol. 805, 16 July 2019 (2019-07-16), pages 991-998, XP085791822, ISSN: 0925-8388, DOI: 10.1016/J.JALLCOM.2019.07.176 [retrieved on 2019-07-16]<br>* abstract, page 922 item 2.1 *<br>----- | 1-13 | TECHNICAL FIELDS SEARCHED (IPC)<br>H01M<br>C01G |

The present search report has been drawn up for all claims

| Place of search | Date of completion of the search | Examiner |
|---|---|---|
| Munich | 6 October 2020 | Szekely, Noemi Kinga |

2

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

This annex lists the patent family members relating to the patent documents cited in the above-mentioned European search report.
The members are as contained in the European Patent Office EDP file on
The European Patent Office is in no way liable for these particulars which are merely given for the purpose of information.

06-10-2020

| Patent document cited in search report | Publication date | Patent family member(s) | Publication date |
|---|---|---|---|
| US 2019300382 A1 | 03-10-2019 | CN 109562957 A | 02-04-2019 |
| | | EP 3473600 A1 | 24-04-2019 |
| | | JP 2019522882 A | 15-08-2019 |
| | | KR 20180077026 A | 06-07-2018 |
| | | US 2019300382 A1 | 03-10-2019 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 8993051 B
- JP 4789066 B
- JP 5139024 B
- US 20150372300 A